# EUROPEAN PATENT SPECIFICATION

(11) **EP 1 297 946 B1**
(45) Date of publication and mention of the grant of the patent: **14.02.2007**
(21) Application number: 02256362.1
(22) Date of filing: 13.09.2002
(51) Int. Cl.: B29D 30/24, B29D 30/20

(54) **Carcass band forming drum and apparatus comprising the same**
Trommel zum Aufbau einer Reifenkarkasse und dieselbe enthaltende Einrichtung
Tambour pour la fabrication d'une carcasse de pneu et appareil comprenant ledit tambour

(30) Priority: 19.09.2001 JP 2001284782
(43) Date of publication of application: 02.04.2003
(73) Proprietor: Bridgestone Corporation, Tokyo 104-0031 (JP)
(72) Inventor: Sawada, C., c/o Bridgestone Corp. Technical Center, Kodaira City, Tokyo (JP)
(74) Representative: Whalley, Kevin

(56) References cited:
- EP-A- 0 459 728
- EP-A- 0 511 818
- DE-A- 19 939 986
- US-A- 4 128 450
- US-A- 4 436 574

## Description

The present invention relates to a band forming drum and a band forming apparatus comprising the same, and particularly a band forming drum that does not require replacement even when the inner diameter of a carcass band is changed, or the rim diameter of a rim for use with a vulcanized tire is changed.

A conventional carcass band forming drum is generally in the form of a single-function machinery that allows formation of a carcass band having a uniquely determined inner diameter. In this instance, it is inevitable, when the rim diameter is changed, to replace or change the band forming drum as well as associated jigs and tools into conformity with the newly desired dimension.

Since the above-mentioned conventional band forming drum cannot substantially form carcass bands having various dimensions adopting to various rim diameters on the same drum, it has been difficult, if not impossible, to achieve automation of carcass band-formation, especially in large item small scale production.

Reference may be made to U.S. Patent No. 3,654,026 which discloses a band forming drum including a plurality of actuators that are synchronously expanded or retracted radially, so as to change the drum diameter. However, such an arrangement is structurally complicated, making it difficult to achieve a satisfactory reliability in operation.

Document US-A-4 436 574 discloses a band forming drum having two types of tapered cones, one of which has a tapered angle of 24° and the other of which has a tapered angle of 30°. The 24° tapered cone and the 30° tapered cone are alternately arranged in the circumferential direction. with such a configuration, radial displacements are different between circumferentially adjacent segments.

It is an object of the present invention to provide a carcass band forming drum and a carcass band forming apparatus comprising the same, allowing formation of carcass bands having various inner diameters without replacement of the forming drum, simply and rapidly accommodating to change in the rim diameter, facilitating automation of formation of various carcass bands having different dimensions, and having simple and highly reliable structure.

According to one aspect of the present invention this object is achieved by the band forming drum as defined in claim 1.

In the band forming drum according to the present invention, each of the pair of tapered cones is allowed to move over about a half length of the segments, so that the outer diameter of the segments can be smoothly expanded or contracted in a wide range by the tapered faces of the tapered cones. The outer diameter of the segment can be also determined at a given size by a position where the tapered cone is to be placed, so that the inner diameter of a carcass band formed on the outer circumferential surface of the segments can be widely varied, if required, with a single drum by appropriately selecting the outer diameter of the segments.

Hence, an automation of forming various carcass bands can be readily realized through changing the diameter of the segments upon forming the carcass bands having various inner diameters by displacement and a positioning stop of tapered cones of a single band forming drum. Moreover, the carcass band forming drum according to the present invention is simple in structure and thus reliable in operation.

The above-mentioned driving means of such a forming drum may comprise an actuator, a screw shaft that can be rotated by the actuator, the screw shaft having male thread sections with mutually opposite leas angles, and female thread members mounted on each of the tapered cones, respectively, and threadedly engaged with the male thread sections of the screwed shaft. With such a configuration, the both tapered cones can be accurately moved toward required positions while approaching or separating each other, and can be securely positioned and held at given positions by stopping the actuator.

Although the required expansive/contractive radial displacement of the segments can be effected by displacing the both tapered cones in the same direction, taking total displacing areas of the both tapered cones and an equipment balance into consideration, each of the tapered cones is preferably moved toward or away from each other, and, furthermore, the screw shaft is preferably provided with male thread sections having lead angles which are mutually opposite in direction.

Each displacement of the segments is preferably guided by a fixing guide member having a flanged shape, a radial shape or the like, so that each of the segments can be accurately moved in parallel.

According to another aspect of the invention this object is achieved by the band forming apparatus as defined in claim 4.

In the band forming apparatus according to the present invention, as mentioned above, the carcass bands having various inner diameter can be formed by the band forming drum, and, in addition, the dimension of the bead rings held by the bead holding means can be also changed depending on an acceptable diameter range of the carcass band. Thus, around the carcass bands having various dimension, bead rings having various dimension and adapting to the carcass bands can be positioned without changing the bead holding means itself.

Each of the bead holders which directly acts on the attractive holding of the bead rings is radially displaced at a required position by the second driving means and placed thereat, so that the bead ring having a dimension corresponding to that of the carcass band can be securely held and positioned at a required position around the carcass bands. Therefore, despite the dimension of the carcass band, the carcass band can be always appropriately pressure-contacted against the bead core on the basis of the radially expansible subsequent deformation of the carcass band.

The second driving means may be composed of a second actuator, a guide ring that can be angularly displaced over a desired angular range by the second actuator, a plurality of cam grooves provided on the guide ring, and a plurality of cam followers each attached to the bead holder so as to be radially displaced by the cam groove. With such a configuration, a radial expansion/contraction position of the bead holder can be accurately specified by radially expanding or contracting the bead holder via the cam follower under a operation of the cam groove. In addition, a secure positioning of the bead holder can be realized by maintaining a rotational attitude with the motor or the cylinder.

For a better understanding of the invention, reference is made to the accompanying drawings, wherein:
FIG. 1 is a sectional view in the axial direction showing an embodiment of a carcass band forming drum;
FIG. 2 is a schematic perspective view of the whole of a carcass band forming apparatus;
FIG. 3 is a plane view of a bead holding means;
FIG. 4 is a sectional view taken along the line IV-IV of FIG. 3; and
FIG. 5 is a plane view of a guide ring.

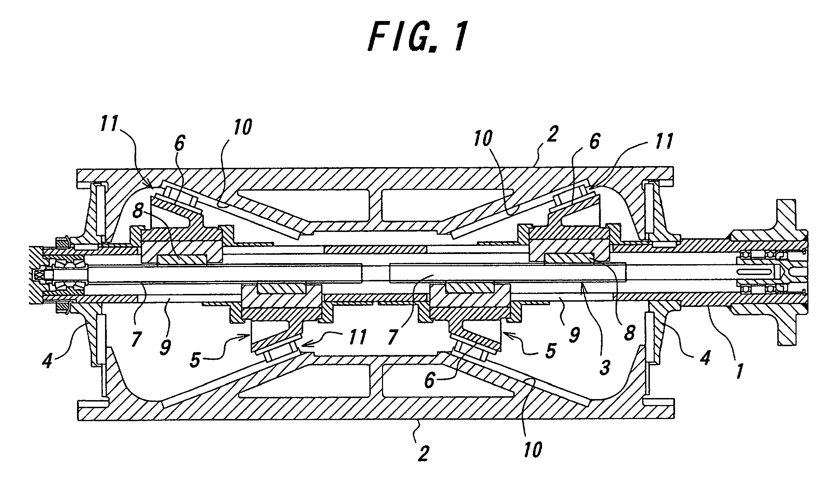

Hereinafter, a preferred embodiment of the present invention will be described with reference to the attached drawings. FIG. 1 is a sectional view of an embodiment of the carcass band forming drum taken along its axis line. In FIG. 1, segments 2 are arranged around a hollow fixed shaft 1, and a screw shaft 3 driven by a not shown actuator such as a servo motor is inserted inside the fixed shaft 1.

A cylindrical shape is formed, for example, by nineteen segments 2 in total, and the both end sections of the segments 2 are guided by a pair of guide members 4 attached to the fixed shaft and having, for example, flanged shapes to be able to move each to the segments 2 in parallel in a direction radial to the axis line of the fixed shaft. When all the segments 2 are considered, they can be radially expanded or contracted to a desired outer diameter by function of the guide members 4.

Inside the segments 2, a pair of tapered cones 5 concentric with the axis line of the fixed shaft are respectively arranged in a position facing to each other. Each of the tapered cones 5 is allowed to move over about a half length of each of the segments 2. The facing position of the pair of tapered cones 5 may be a position where tapered faces 6 are mutually faced, as shown in FIG. 1, or otherwise a position where the tapered faces 6 are mutually spaced.

The male thread sections 7 are formed on the screw shaft 3, are spaced each other, and have lead angles being mutually opposite in direction. Each of the female thread members 8 which is threadedly engaged with the male thread sections 7 is fixedly fastened on the tapered cone 5 via a respective slit 9 formed on the fixed shaft 1 and extending in its axis line direction as well as circumferentially spaced, so that the illustrated tapered cones 5 can be moved in the axis line direction while the screw shaft 3 is rotated. In this case, the movements of each of the tapered cones 5 over about a half length of the segments 2 are allowable based on a selection of the length of the slit 9 provided that the length of the male thread section 7 is enough..

Therefore, as shown in FIG. 1, the driving means is composed of a screw shaft 3 driven by a motor, male thread sections 7 provided on the screw shaft 3 and having lead angles which are mutually opposite in direction, and the female members 8 mounted on the tapered cones and threadedly engaged with the male sections 7, respectively. With this driving means, each of the tapered cones 5 is synchronously operated in a mutually approaching or separating direction on the basis of the rotary movement of the screw shaft 3.

Further, a inclined face 10 which contacts each tapered face 6 of both of the tapered cones 5 directly or indirectly as shown in FIG. 1 and converts axial displacement of the tapered cones 5 into radial displacement of the segments 2 is provided on each of the segments 2. In FIG. 1, in order to achieve accurate radial displacement of the segment 2 which surely follows the displacement of the tapered cones 5, the tapered face 6 of the tapered cone 5 indirectly contacts the inclined face 10 of each of the segments 2 via a direct action guide 11 giving a catch between these faces.

With such a configuration, each of the segments 2 is radially expanded in an equal amount evenly in the left side and the right side of FIG. 1 by an approaching displacement of each of the tapered cones 5, while radially contracted in an equal amount by a spacing displacement of these tapered coned 5. In either cases, both of the tapered cones 5 and, furthermore, the segments 2 are positioned and stopped at a desired position by a stoppage of the rotation of the screw shaft 3. This positioned state is securely maintained even when an external force caused by winding carcass materials or the like acts on the outer circumferential surface of the segments 2.

In the band forming drum thus constructed, a desired carcass band can be naturally formed as in the case with the conventional typical forming drum by winding inner liners, carcass materials or the like on the outer circumferential surface of the drum having a given outer diameter and then, if necessary, suitably expanding or contracting the outer diameter of the drum. Since each of the segments 2, in other words, the diameter of the outer circumferential surface of the drum can be expanded or contracted over a wide range due to particularly a large amount of displacement of the tapered cone 5, and the diameter can be securely maintained as desired, the band forming drum can simply and rapidly accommodate to an extensive change of the inner diameter of the carcass band formed on the outer circumferential surface of the drum.

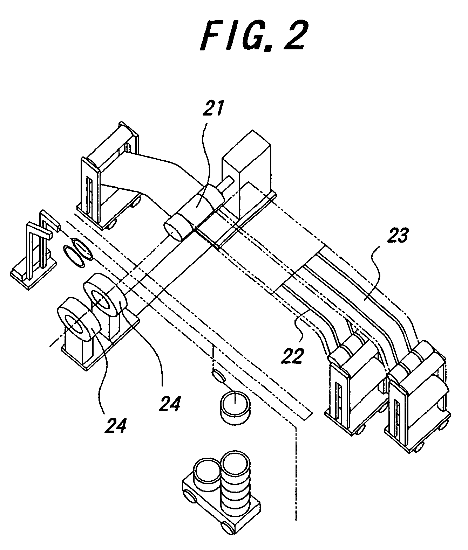

FIG. 2 is a schematic perspective view showing an example of a carcass band forming apparatus to which the above-mentioned band forming drum is applied. In this figure, inner liners 22, carcass materials 23 and the like are wound on a band forming drum 21, as needed, to form a generally cylindrical, desired carcass band. Thereafter, the carcass band as well as the band forming drum 21 are inserted into a pair of bead holding means 24, and the carcass band is radially expanded therein by a function of the band forming drum 21 to pressure-contact the carcass band against bead rings which are attractively held by the bead holding means 24 and have given inner diameters.

In this case, it is preferable for each of the bead holding means 24 that its relative position in the axial and radial directions can be suitably selected.

After the carcass band is pressure-contacted against the bead rings as described above, the band forming drum 21 returns to the original position shown in FIG. 2 with leaving the carcass band on the beard ring-holding means 2 under its contractive radial deformation, while the bead holding means 24 acts to integrate the carcass band with the bead rings and bring them to a subsequent forming step.

In such a band forming apparatus, when the band forming drum 21 can accommodate to form the carcass bands having extensive inner diameter range as described above, it is reasonable that each of the bead holding means 24 is allowed to apply to the carcass bands having various dimensions and, furthermore, to the bead rings, so that replacements of the bead holding means and jigs for each change of the bead ring dimension are dispensed.

In each of the bead holding means 24 positioning and stopping the bead rings abound the carcass band formed on the band forming drum 21 of the above-mentioned band forming apparatus, bead holders which directly contributes to retention of the bead rings are allowed for expansive/contractive radial displacement over a wide range and for positioning and stopping at a desired position.

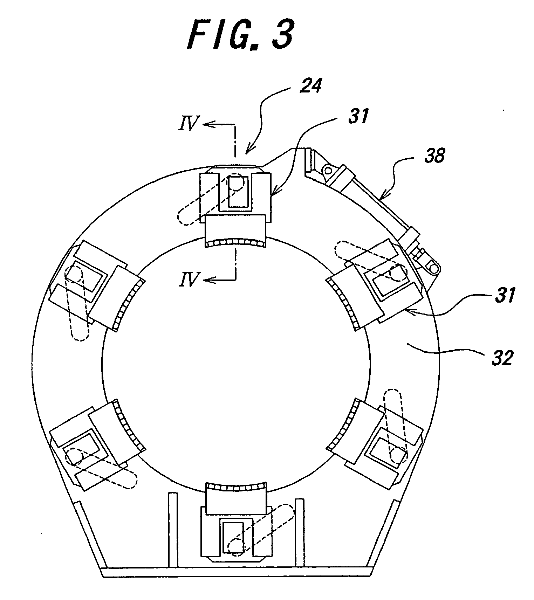

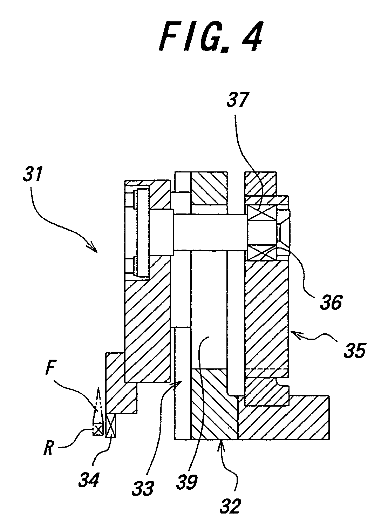

FIG. 3 is a plane view showing this embodiment, and FIG. 4 is a sectional view taken along the line IV-IV of FIG. 3. In this case, a plurality of, for example, six bead holders 31 which are circumferentially spaced and attractively hold the bead rings in cooperation with each other are respectively provided on fixing base plates 32 in such a manner that the plates are allowed for expansive/contractive radial displacement. The expansive/contractive radial displacement can be ensured by attaching each of the bead holders 31 to the generally circular ring-shaped fixing base plate32 at two points in the periphery direction via a direct acting guide 33 extending in parallel to a radial segment, as shown in FIG. 4. Each of the bead ring holder 31 can attractively hold a bead ring R and a bead filler F attached on the outer circumferential surface of the bead ring at a front face of a permanent magnetic 34 arranged on a radially inner end section of the bead holder, as shown by a dotted line in FIG. 4. Therefore, each of the direct acting guides 33 functions as guide means for guiding expansive/contractive displacement of each of the bead holder 31.

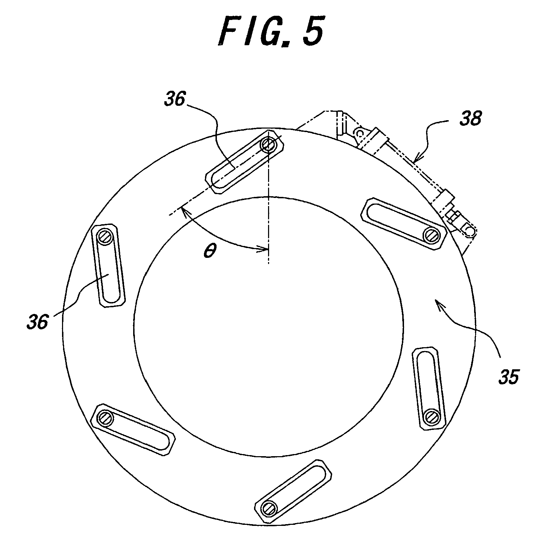

In order to mutually synchronize each expansive/contractive displacement of the bead holders 31 thus arranged, a guide ring 35 is rotatably supported on the back side of the fixing base plate 32, cam grooves 36 which locate corresponding to each of the bead holders, linearly extends in a certain direction at an angle θ from the radial segment and have equal lengths are provided in the guide ring 35, as shown in FIG. 5 by way of example, and a cam follower 37 which is attached to each of the bead holder 31, passes through the fixing base plate 32 and protrudes from the rear side is fitted into each of the cam grooves 36.

With such a configuration, for example, under a function of a cylinder 38 connecting one end to the fixing base plate 32 and the other to the guide ring 35, the guide ring 35 is rotationally displaced as required to change a position of the cam groove 36 relative to the cam follower 37, so that the cam follower 37 can be displaced within a radially long hole 39 formed in the fixing base plate 32 to steplessly displace the bead holder 31 to a desired radial position, and the bead holder 31 can be positioned and stopped at the radial position by terminating the rotation of the guide ring 35.

In this way, a radially expansible/contractible driving means is composed of a guide ring 35 rotationally displaced by a cylinder 38 over a desired angle range, a plurality of cam groove 3 provided on the guide ring, and the cam holder 37 attached to each of the bead holder 31 and radially displaced by each of the cam grooves. The radially expansible/contractible driving means can synchronize and steplessly expand/contract the bead holders 31 on the basis of the displacement of the guide ring 35, and each of the bead holders 31 can be positioned and stopped at a desired position on the basis of the stoppage of the guide ring 35. Although not being illustrated, the guide ring 35 can be also rotationally displaced by a servo motor or other motor instead of the cylinder 38.

According to the thus configured bead holding means 24, each of the bead holders 31 can be expansively/contractively displaced over a wide range, so that the bead ring R having various dimensions corresponding to the diameters of the carcass bands formed by the band forming drum 21 can be properly held without a replacement of the bead holding means or the like. Therefore, the band forming apparatus including the band forming drum 21 and the bead holding means 24 can simply and rapidly accommodate to various dimensions to easily and readily realize an automation of the whole apparatus for a large item small scale production.

As having been clearly shown in the above description, according to the band forming drum of the present invention, since each segment can be expansively/contractively displaced over a wide diameter range as well as positioned and stopped at a desired position, carcass bands having various diameters can be simply and rapidly formed by a single forming drum. Thus, the formation of carcass bands having various dimensions can be easily automated.

Moreover, in the band forming apparatus according to the present invention, in addition to the above description, each of the bead holder on the bead holding means is allowed to steplessly expand/contract over a wide diameter range as well as to be positioned and stopped at a desired position, so that, by means of a single bead holding means, the bead rings can be always properly set to the carcass bands formed by the band forming drum and having various dimensions as required, and a automation for changes of the diameter of the bead ring can be sufficiently facilitated.

While the preferred embodiments of the present invention have been described, it is to be understood that modifications and variations may be made without departing from the scope of the invention as defined by the appended claims.

## Claims

1. A band forming drum, comprising:
a plurality of radially expandable/contractible segments (2), defining an outer circumferential surface of the drum for winding carcass materials thereon and thereby forming a generally cylindrical carcass band;
a pair of tapered cones (5) concentrically arranged inside said segments, each having a tapered face (6) and capable of axially moving over about a half length of the segments (2); and
a driving means (3,7,8) for displacing the tapered cones (5) toward and away from each other or synchronously in the same direction over their entire movable ranges, and also for positioning and stopping the cones at required positions;
each said segment (2) having an inclined surface (10) which contacts the tapered face (6) of each said tapered cone (5) for converting an axial displacement of the tapered cone into a radial displacement thereof; and
each of the segments (2) being radially expandable/contractible in an equal amount by displacements of the tapered cones (5).

2. A band forming drum as claimed in claim 1, **characterized in that** said driving means comprises an actuator, a screw shaft (3) that can be rotated by the actuator, said screw shaft having male thread sections (7) with mutually opposite lead angles, and female thread members (8) mounted on the tapered cones (5), respectively, and threadedly engaged with the male thread sections (7) of the screw shaft.

3. A band forming drum as claimed in claim 1 or 2, **characterized by** further comprising guide members (4) for guiding radial displacements of the segments (2).

4. A band forming apparatus, comprising a band forming drum (21) according to any of claims 1 to 3, and a pair of bead holding means (24) for positioning the bead rings (R) around a carcass band formed on the band forming drum and holding the bead rings for pressure-contacting the carcass against the bead rings during a radial expansion of the carcass band;
said band forming drum (21) having an outer circumferential surface of the drum for winding carcass materials thereon and thereby forming a generally cylindrical carcass band; and
said bead holding means (24) comprising a plurality of bead holders (31) provided for each of the bead holding means, which are circumferentially spaced from each other and adapted to cooperate with each other for attractively holding the bead rings (R), a second driving means (35-38) for radially displacing said bead holders (31) simultaneously and steplessly, and positioning and stopping the bead holders at a given position, and guide means (33) for guiding a radial displacement of said bead holders.

5. A band forming apparatus as claimed in claim 4, **characterized in that** said second driving means comprises a second actuator (38), a guide ring (35) that can be angularly displaced over a desired angular range by said second actuator, a plurality of cam grooves (36) provided on the guide ring, and a plurality of cam followers (37) each attached to the bead holder (31) so as to be radially displaced by the cam groove.

## Patentansprüche

1. Bandformtrommel, die Folgendes umfasst:
mehrere in Radialrichtung ausfahrbare/einziehbare Segmente (2), die eine Außenumfangsfläche der Trommel definieren, um Karkassenmaterialien darauf zu wickeln und **dadurch** ein allgemein zylindrisches Karkassenband zu formen,
ein Paar von verjüngten Kegeln (5), die konzentrisch innerhalb der Segmente angeordnet sind, wobei jeder eine verjüngte Fläche (6) hat und dazu in der Lage ist, sich über etwa eine halbe Länge der Segmente (2) zu bewegen, und
ein Antriebsmittel (3, 7, 8) um die verjüngten Kegel (5) zueinander hin oder voneinander weg oder synchron in der gleichen Richtung über deren gesamte Bewegungsbereiche zu verschieben, und ebenfalls, um die Kegel an erforderlichen Positionen anzuordnen und anzuhalten,
wobei jedes Segment (2) eine geneigte Fläche (10) hat, welche die verjüngte Fläche (6) jedes der verjüngten Kegel (5) berührt, um eine Axialverschiebung des verjüngten Konus in eine Radialverschiebung desselben umzuwandeln, und
wobei jedes der Segmente (2) in einem gleichen Ausmaß durch Verschiebungen der verjüngten Kegel (5) in Radialrichtung ausfahrbar/einziehbar ist.

2. Bandformtrommel nach Anspruch 1, **dadurch gekennzeichnet, dass** das Antriebsmittel ein Stellglied, eine Schraubenwelle (3), die durch das Stellglied gedreht werden kann, wobei die Schraubenwelle Außengewindeabschnitte (7) mit wechselseitig entgegengesetzten Anschnittwinkeln hat, und Innengewindeelemente (8), die jeweils an den verjüngten Kegeln (5) angebracht sind und schraubend mit den Außengewindeabschnitten (7) der Schraubenwelle in Eingriff gebracht werden, umfasst.

3. Bandformtrommel nach Anspruch 1 oder 2, **dadurch gekennzeichnet, dass** sie ferner Führungselemente (4) umfasst, um die Radialverschiebungen der Segmente (2) zu führen.

4. Bandformvorrichtung, die eine Bandformtrommel (21) nach einem der Ansprüche 1 bis 3 und ein Paar von Wulsthaltemitteln (24) umfasst, um die Wulstringe (R) um ein auf der Bandformtrommel geformtes Karkassenband anzuordnen und die Wulstringe für eine Druckberührung der Karkasse an den Wulstringen während einer Radialausdehnung des Karkassenbandes zu halten,
wobei die Bandformtrommel (21) eine Außenumfangsfläche der Trommel hat, um Karkassenmaterialien darauf zu wickeln und **dadurch** ein allgemein zylindrisches Karkassenband zu formen, und
die Wulsthaltemittel (24) mehrere für jedes der Wulsthaltemittel bereitgestellte Wulsthalter (31), die in Umfangsrichtung mit Zwischenraum zueinander angeordnet und dafür eingerichtet sind, miteinander zusammenzuwirken, um die Wulstringe (R) anziehend zu halten, ein zweites Antriebsmittel (35 - 38), um die Wulsthalter (31) gleichzeitig und stufenlos in Radialrichtung zu verschieben und die Wulsthalter an einer gegebenen Position anzuordnen und anzuhalten, und Führungsmittel (33), um die Radialverschiebung der Wulsthalter zu führen, umfassen.

5. Bandformvorrichtung nach Anspruch 4, **dadurch gekennzeichnet, dass** das zweite Antriebsmittel ein zweites Stellglied (38), einen Führungsring (35) der durch das zweite Stellglied winklig über einen gewünschten Winkelbereich verschoben werden kann, mehrere Nockenrillen (36), die am Führungsring bereitgestellt werden, und mehrere Nockenstößel (37), die jeder am Wulsthalter (31) befestigt sind, um so durch die Nockenrille in Radialrichtung verschoben zu werden, umfasst.

## Revendications

1. Tambour de fabrication d'une carcasse, comprenant :
plusieurs segments à dilatation/contraction radiale (2), définissant une surface circonférentielle externe du tambour, pour y enrouler les matériaux de carcasse et fabriquer ainsi une carcasse généralement cylindrique ;
une paire de cônes effilés (5) agencée de manière concentrique à l'intérieur desdits segments, comportant chacun une face effilée (6) et pouvant se déplacer axialement au-delà d'environ la moitié de la longueur des segments (2) ; et
un moyen d'entraînement (3, 7, 8) pour déplacer les cônes effilés (5) l'un vers l'autre ou l'un à l'écart de l'autre, ou de manière synchronisée dans la même direction, au-delà de leurs intervalles de déplacement entiers, et pour positionner et arrêter les cônes au niveau des positions voulues ;
chaque dit segment (2) comportant une surface inclinée (10) contactant la face effilée (6) de chaque dit cône effilé (5), pour convertir un déplacement axial du cône effilé en un déplacement radial correspondant ; et
chacun des segments (2) pouvant être dilaté/contracté radialement d'une distance égale par l'intermédiaire de déplacements des cônes effilés (5).

2. Tambour de fabrication d'une carcasse selon la revendication 1, **caractérisé en ce que** ledit moyen d'entraînement comprend un dispositif d'actionnement, un arbre d'hélice (3), pouvant être tourné par le dispositif d'actionnement, ledit arbre d'hélice comportant des sections à filetage mâle (7), avec des angles d'inclinaison mutuellement opposés, et des éléments à filetage femelle (8) montés respectivement sur les cônes effilés (5), et engagés par filetage dans les sections à filetage mâle (7) de l'arbre d'hélice.

3. Tambour de fabrication d'une carcasse selon les revendications 1 ou 2, **caractérisé en ce qu'**il comprend en outre des éléments de guidage (4) pour guider les déplacements radiaux des segments.

4. Appareil de fabrication d'une carcasse, comprenant un tambour de fabrication d'une carcasse (21) selon l'une quelconque des revendications 1 à 3, et une paire de moyens de retenue des talons (24) pour positionner les tringles (R) autour d'une carcasse formée sur le tambour de fabrication de la carcasse, et retenant les tringles en vue d'une mise en contact par pression de la carcasse contre les tringles au cours de la dilatation radiale de la carcasse ;
ledit tambour de fabrication de la carcasse (21) comportant une surface circonférentielle externe du tambour pour y enrouler les matériaux de carcasse et former ainsi une carcasse généralement cylindrique ; et
lesdits moyens de retenue des talons (24) comprenant plusieurs éléments de retenue des talons (31) sur chaque moyen de retenue des talons, espacés circonférentiellement les uns des autres et destinés à coopérer pour retenir par attraction les tringles (R), un deuxième moyen d'entraînement (35-38) pour déplacer radialement lesdits éléments de retenue des talons (31), de manière simultanée et continue, et pour positionner et arrêter les éléments de retenue des talons au niveau d'une position voulue, ainsi qu'un moyen de guidage (33) pour guider un déplacement radial desdits éléments de retenue des talons.

5. Appareil de fabrication d'une carcasse selon la revendication 4, **caractérisé en ce que** ledit deuxième moyen d'entraînement comprend un deuxième dispositif d'actionnement (38), une bague de guidage (35) pouvant être déplacée angulairement au-delà d'un intervalle angulaire voulu par ledit deuxième dispositif d'entraînement, plusieurs rainures à cames (36) formées sur la bague de guidage et plusieurs galets de came (37), fixés chacun sur l'élément de retenue des talons (31), en vue d'un déplacement radial par la rainure à came.
